Europäisches Patentamt

European Patent Office

Office européen des brevets

(11) Veröffentlichungsnummer: **0 141 010**
**B1**

(12) **EUROPÄISCHE PATENTSCHRIFT**

(45) Veröffentlichungstag der Patentschrift:
**18.01.89**

(21) Anmeldenummer: **84104037.1**

(22) Anmeldetag: **11.04.84**

(51) Int. Cl.⁴: **F 41 G 7/22**

(54) **Suchkopf für zielsuchende Flugkörper.**

(30) Priorität: **11.05.83 DE 3317232**

(43) Veröffentlichungstag der Anmeldung:
**15.05.85 Patentblatt 85/20**

(45) Bekanntmachung des Hinweises auf die Patenterteilung:
**18.01.89 Patentblatt 89/3**

(84) Benannte Vertragsstaaten:
**DE FR GB**

(56) Entgegenhaltungen:
**FR-A- 2 286 365**
**US-A- 3 698 812**
**US-A- 4 264 907**

(73) Patentinhaber: **Bodenseewerk Gerätetechnik GmbH,**
**Alte Nussdorfer Strasse 15 Postfach 1120,**
**D-7770 Überlingen/Bodensee (DE)**

(72) Erfinder: **Gauggel, Roland, Waldstrasse 15,**
**D-7777 Salem-Grasbeuren (DE)**
Erfinder: **Eckhardt, Reiner, Weinbergstrasse 36,**
**D-7770 Überlingen (DE)**

(74) Vertreter: **Weisse, Jürgen, Dipl.-Phys. et al,**
**Patentanwälte Dipl.-Phys. Jürgen Weisse Dipl.-Chem.**
**Dr. Rudolf Wolgast Bökenbusch 41 Postfach 11 03 86,**
**D-5620 Velbert 11 Langenberg (DE)**

## Beschreibung

### Technisches Gebiet

Die Erfindung betrifft einen Suchkopf für zielsuchende Flugkörper, enthaltend einen auf ein Ziel ausrichtbaren Sucher und einen in dem Suchkopf angeordneten, zusammen mit dem Sucher auf das Ziel ausrichtbaren Abstandssensor.

### Zugrundeliegender Stand der Technik

Bei hoch manövrierfähigen Luftzielen ist ein Direkttreffer sehr schwer zu erreichen. Es sind daher bei bekannten zielsuchenden Flugkörpern mit Gefechtskopf Annäherungssensoren vorgesehen, durch welche der Gefechtskopf gezündet wird, wenn sich das Ziel innerhalb eines bestimmten Abstandsbereiches von dem Flugkörper befindet. Der Gefechtskopf wird auf diese Weise auch dann gezündet, wenn sich das Ziel innerhalb eines bestimmten Abstandsbereiches von dem Flugkörper befindet.

Die FR-A-2 286 365 beschreibt als Stand der Technik einen Sucher, der kardanisch aufgehängt ist und ein Ziel verfolgt, und einen an dem Sucher vorgesehenen Annäherungssensor. Nach der Lehre der FR-A-2 286 365 übernimmt der Sucher gleichzeitig die Funktion des Zünders und Annäherungssensors, indem als Kriterium für die Zündung der Schielwinkel bzw. die Winkelgeschwindigkeit des Suchers dient.

Die US-A-3 698 812 zeigt einen auf Laserbasis arbeitenden Entfernungssensor. Das gleiche optische System beaufschlagt einen Infrarordetektor, durch welchen der Entfernungssensor auf das Ziel ausrichtbar ist.

Die US-A-4 264 907 zeigt einen Flugkörper, der eine Rollbewegung ausführt und ein Suchersystem aufweist, welches auf zwei Formen von durch das Ziel ausgesandter Energie anspricht. Das Suchersystem hat die Fähigkeit, auf seinem Weg zum Ziel zwischen den verschiedenen Führungsweisen zu wechseln. Es sind dort zwei flugkörperfeste Hochfrequenzantennen auf diametral einander gegenüberliegenden Seiten der Flugkörperachse vorgesehen. Die Ausgangssignale dieser beiden Antennen beaufschlagen je eine Mischstufe, deren Ausganssignale wiederum beide einer gemeinsamen Phasenvergleichsstufe zugeführt werden. Durch den Phasenvergleich wird schliesslich ein Signal gewonnen, das der Sichtlinienänderungsrate entspricht.

### Offenbarung der Erfindung

Bei einem Suchkopf der eingangs genannten Art sind Sucher und Abstandssensor auf das Ziel ausgerichtet. Die Sucherachse bildet daher u.U. mit der Längsachse des Flugkörpers einen Winkel, den «Schielwinkel». Dieser Schielwinkel kann relativ gross werden, gerade wenn der Flugkörper nahe an dem Ziel vorbeifliegt. Bei einem grossen Schielwinkel kann der Abstandssensor ganz oder teilweise durch die Wandung des Suchkopfes abgedeckt werden. Er liefert dann keine brauchbare Abstandsmessung mehr.

Der Erfindung liegt daher die Aufgabe zugrunde, auch bei grossen Schielwinkeln ein ungestörtes Abstandssensor-Signal zu erzeugen.

Erfindungsgemäss wird diese Aufgabe dadurch gelöst, dass mehrere von dem Sucher funktionell unabhängige Abstandssensoren winkelversetzt um die optische Achse des Suchers herum auf einem den Sucher tragenden, nach dem Ziel ausrichtbaren Teil (24) angeordnet sind.

Auf diese Weise kann sichergestellt werden, dass bei Abdecken eines Abstandssensors infolge einer Neigung des Suchers in einer Richtung jedenfalls ein dazu winkelversetzter Abstandssensor nicht abgedeckt ist und seine Funktion erfüllen kann.

Dieses Problem und demgemäss auch diese Lösung ist in keiner der vorgenannten Druckschriften angesprochen. Bei der US-A-3 698 812 ist für den Sucher und den Annäherungssensor ein gemeinsames optisches System vorgesehen. Es ist also für Sucher wie Annäherungssensor jeweils ein ganz bestimmter Aufbau erforderlich. Für Sucher oder Annäherungssensoren mit anderem Prinzip oder anderem Aufbau ist die Lehre der US-A-3 698 812 nicht anwendbar. Die Anordnung nach der Erfindung ist dagegen unabhängig von dem Aufbau und dem Prinzip des Annäherungssensors und des Suchers verwendbar, wobei beide Funktionen von unabhängig nebeneinander angeordneten Baugruppen erfüllt werden. Die FR-A-2 286 365 offenbart zum Stand der Technik nur einen Annäherungssensor in Verbindung mit dem Sucher ohne nähere Angaben über deren räumliche Anordnung und ohne Hinweis auf das der Erfindung zugrundeliegende Problem. Bei der US-A-4 264 907 wirken die zwei flugkörperfesten Antennen zur Bildung eines Signals zusammen, nach welchem der Flugkörper zu dem Ziel geführt werden soll, nicht zur Bildung eines Abstandssignals. Sie sind auch nicht alternativ eingesetzt, so dass eine wirksam würde, wenn die andere abgedeckt ist, sondern wirken notwendig ständig zur Bildung des Signals zusammen.

Ein Ausführungsbeispiel der Erfindung ist nachstehend unter Bezugnahme auf die zugehörigen Zeichnungen näher erläutert:

### Kurze Beschreibung der Zeichnungen

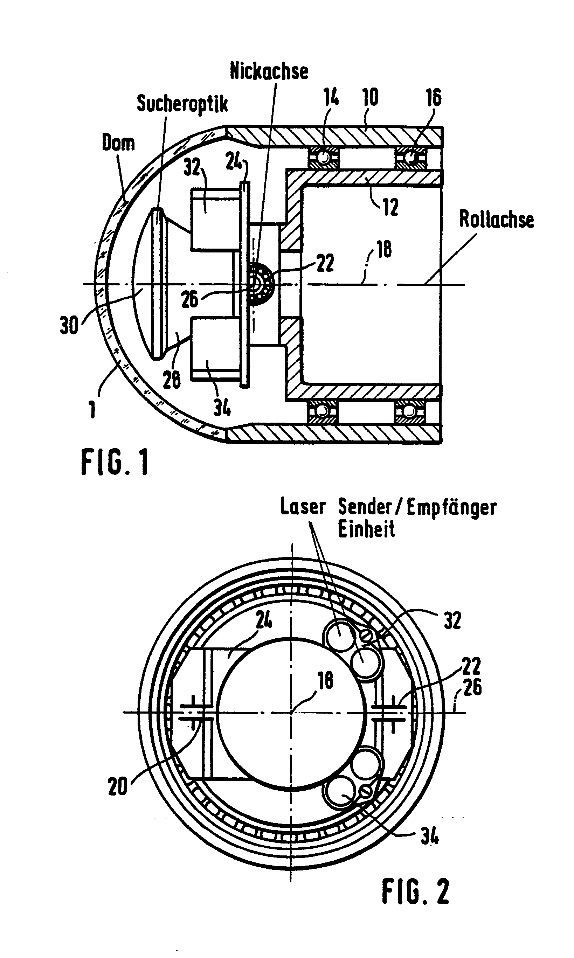

Fig. 1 zeigt einen Längsschnitt durch einen Suchkopf

Fig. 2 ist eine Vorderansicht des Suchkopfes von links in Fig. 1 gesehen.

### Bevorzugte Ausführung der Erfindung

Mit 10 ist ein Suchkopf bezeichnet, der die Spitze eines Flugkörpers bildet. Der Flugkörper kann eine zielsuchende Luft-Luft-Rakete sein. Der Suchkopf ist durch einen Dom 11 abgeschlossen.

In dem Suchkopf 10 ist ein Rollrahmen 12 in Lagern 14, 16 um eine im wesentlichen in Längsrichtung des Flugkörpers verlaufende Rollachse 18 drehbar gelagert. An dem Rollrahmen 12 ist in Lagern 20, 22 ein Teil 24 um eine quer zu der Rollachse 18 verlaufende Nickachse 26 schwenkbar gelagert. Der Teil 24 bildet somit einen Nickrahmen. Der Teil 24 trägt den Sucher 28 mit einer Sucheroptik 30. Der Sucher 28 liefert Zielablagesignale, welche Drehbewegungen des Rollrahmens 12 um die Rollachse 18 und des Teils 24 um die Nickachse 26 steuern, derart dass die optische Achse des Suchers 28 sich auf das Ziel ausrichtet und ständig dem Ziel nachgeführt wird.

Im Suchkopf 10 ist ein Abstandssensor 32 angeordnet, der zusammen mit dem Sucher 28 auf das Ziel ausrichtbar ist. Dieser Abstandssensor 32 ist eine Laser-Sender-und-Empfängereinheit. Diese besteht aus einen Laser als Sender, der ein eng gebündeltes Lichtbündel im Infrarot aussendet. Die von dem Ziel reflektierte Energie wird von einem Empfänger aufgefangen, der dicht neben dem Sender angeordnet ist. Als Mass für den Abstand kann die Laufzeit gepulster Lichtbündel dienen. Weiter kann die empfangene Energie selbst ein Mass für den Abstand des Ziels liefern. Solche Laser-Sender-und Empfängereinheiten sind an sich bekannt und daher hier nicht im einzelnen beschrieben.

Der Abstandssensor 32 ist auf dem Teil 24 neben dem Sucher 28 montiert. Bei grossen Schielwinkeln des Suchers 28, wenn also der Teil 24 um einen grossen Winkel um die Nickachse 26 verschwenkt ist, kann der Abstandssensor 32 ganz oder teilweise durch die Wandung des Suchkopfs 10 o.dgl. abgedeckt werden. Er liefert dann keine brauchbare Abstandsmessung mehr. Um diesen Effekt zu vermeiden, sind auf dem den Sucher 28 tragenden, nach dem Ziel aurichtbaren Teil 24 mehrere Abstandssensoren 32 und 34 winkelversetzt um die optische Achse des Suchers 28 angeordnet. Es kann so sichergestellt werden, dass bei Abdecken eines Abstandssensors, z.B. 32, durch Neigen des Teils 24 auf jeden Fall ein auf der gegenüberliegenden Seite angeordneter anderer Abstandssensor 34 nicht abgedeckt ist und seine Funktion erfüllen kann. Bei einem Suchkopf der beschriebenen Art mit dem Rollrahmen 12 und dem um die Nickachse 26 schwenkbaren Teil 24 genügen zwei Abstandssensoren 32 und 34, die auf dem ausrichtbaren Teil 24 auf gegenüberliegenden Seiten der Nickachse 26 angeordnet sind.

**Patentansprüche**

1. Suchkopf für zielsuchende Flugkörper, enthaltend

(a) einen auf ein Ziel ausrichtbaren Sucher (28) und

(b) einen in dem Suchkopf angeordneten, zusammen mit dem Sucher (28) auf das Ziel ausrichtbaren Abstandssensor (32),
dadurch gekennzeichnet, dass

(c) mehrere von dem Sucher funktionell unabhängige Abstandssensoren (32, 34) winkelversetzt um die optische Achse des Suchers (28) herum auf einem den Sucher (28) tragenden, nach dem Ziel ausrichtbaren Teil (24) angeordnet sind.

2. Suchkopf nach Anspruch 1, dadurch gekennzeichnet, dass

(a) ein Rollrahmen (12) gegenüber dem Flugkörper um eine in Längsrichtung des Flugkörpers verlaufende Rollachse (18) drehbar gelagert ist,

(b) der mit dem Sucher (28) ausrichtbare Teil (24) an dem Rollrahmen (12) um eine quer zu der Rollachse (18) verlaufende Nickachse (26) schwenkbar gelagert ist und

(c) die zwei Abstandssensoren (32, 34) auf dem ausrichtbaren Teil (24) auf gegenüberliegenden Seiten der Nickachse (26) angeordnet sind.

**Claims**

1. Seeker head for a target seeking missile, comprising

(a) a seeker (28) adapted to be directed to a target, and

(b) a distance sensor (32) arranged in the seeker head and adapted to be directed to the target together with the seeker (28),
characterized in that

(c) several functionally independent distance sensors (32, 34) are angularly offset about the optical axis of the seeker (28) on a part (24), which carries the seeker (28) and which is adapted to be directed to the target.

2. Seeker head as set forth in claim 1, characterized in that

(a) a roll gimbal (12) is rotatably mounted relative to the missile about a roll axis (18) extending in the longitudinal direction of the missile,

(b) the part (24) adapted to be aligned together with the seeker (28) is pivotally mounted on the roll gimbal (12) about a pitch axis (26) extending transverse to the roll axis (18), and

(c) the two distance sensors (32, 34) are arranged on opposite sides of the pitch axis (26) on the part (24) adapted to be aligned.

**Revendications**

1. Tête chercheuse pour des missiles cherchant un cible, comprenant

(a) un chercheur (28) alignable vers un cible, et

(b) un capteur de distance (32) disposé dans la tête chercheuse et alignable conjointement avec le chercheur (28) vers le cible,
caractérisée par le fait que

(c) plusieurs capteurs de distance (32, 34) fonctionnellement indépendant du chercheur sont disposés à décalage angulaire autour de l'axe optique du chercheur (28) sur un élément (24) portant le chercheur (28) et alignable vers le cible.

2. Tête chercheuse selon la revendication 1, caractérisée par le fait que

(a) un châssis de roulis (12) est monté rotativement relativement au missile autour d'un axe de roulis (18) s'étandant en direction longitudinale du missile,

(b) l'élément (24) alignable avec le chercheur (24) est monté pivotablement au châssis de roulis (12) autour d'un axe de tangage (26) s'étandant transversalement à l'axe de roulis (18), et

(c) les deux capteurs de distance (32, 34) sont disposés sur l'élément alignable (24) sur des côtés opposés de l'axe de tangage (26).

Nickachse

Sucheroptik

Dom

**14  10  16**

**32  24**

Rollachse

**12**

**22  18**

**30**

**26**

**1**

**28  34**

## FIG. 1

Laser Sender/Empfänger
Einheit

**24  32**

**18  22 26**

**20  34**

## FIG. 2